# DEMANDE DE BREVET EUROPEEN

(11) **EP 4 726 074 A1**
(43) Date de publication de la demande: **15.04.2026**
(21) Numéro de dépôt: 25207926.4
(22) Date de dépôt: 10.10.2025
(51) Int. Cl.: C23F 13/04, C23F 13/06, C23F 13/10, C23F 13/18, C23F 13/22, F16L 58/18, G01N 17/02, G01N 17/04

(54) **DISPOSITIF DE RACCORDEMENT DE DEUX CONDUITES À PROTECTION CATHODIQUE, ENSEMBLE ET PROCÉDÉ DE SURVEILLANCE ASSOCIÉS**

(30) Priorité: 10.10.2024 FR 2410946
(71) Demandeur: NAVAL Group, 75015 Paris (FR)
(72) Inventeur: HENRY, François, 50104 CHERBOURG-OCTEVILLE CEDEX (FR); PIERSON, Daniel, 50104 CHERBOURG-OCTEVILLE CEDEX (FR); GROLLEAU, Anne-Marie, 50104 CHERBOURG-OCTEVILLE CEDEX (FR)
(74) Mandataire: Lavoix

(57) **Abrégé**

Le dispositif de raccordement (20) comprend :
- une bride de raccordement (22) destinée à raccorder fluidiquement deux portions de conduites (14) et comportant un corps annulaire (30) délimitant un passage de circulation d'un fluide électriquement conducteur ;
- un organe de protection cathodique agencé dans le corps annulaire (30) de la bride de raccordement (22) ;
- un circuit électrique (50) dont une première borne (54) est reliée électriquement à l'organe de protection cathodique et dont au moins une deuxième borne (56) est destinée à être reliée électriquement à une des deux portions de conduite (14).

Le circuit électrique (50) comprend en outre un appareil (52) de mesure destiné à mesurer l'intensité du courant électrique circulant dans l'organe de protection cathodique entre les bornes (54, 56).

## Description

La présente invention concerne un dispositif de raccordement de deux portions de conduites destinées au transport d'un fluide électriquement conducteur comprenant :
- une bride de raccordement destinée à raccorder fluidiquement les deux portions de conduite et comportant un corps annulaire délimitant un passage de circulation de fluide ;
- un organe de protection cathodique agencé dans le corps annulaire de la bride de raccordement et délimitant au moins en partie le passage de circulation de fluide ;
- un circuit électrique dont une première borne est reliée électriquement à l'organe de protection cathodique et dont au moins une deuxième borne est destinée à être reliée électriquement à une des deux portions de conduite.

De telles conduites et un tel dispositif de raccordement sont notamment destinés au transport d'eau de mer.

Dans un tel dispositif de raccordement, l'organe de protection cathodique assure le rôle d'anode sacrificielle et permet de protéger les conduites de la corrosion.

L'organe de protection cathodique est intégré dans le corps de la bride de raccordement si bien que pour contrôler l'efficacité de la protection cathodique et/ou l'état de consommation de l'anode sacrificielle, il est nécessaire de démonter la bride de raccordement.

Ceci représente une opération pénible, complexe et qui nécessite la mise à l'arrêt de la circulation d'eau de mer dans le circuit.

Un but de l'invention est alors de proposer un dispositif de raccordement permettant une surveillance plus précise et plus aisée de l'organe de protection cathodique.

A cet effet, l'invention a pour objet un dispositif de raccordement du type susmentionné, dans lequel le circuit électrique comprend en outre un appareil de mesure de l'intensité du courant électrique destiné à mesurer l'intensité du courant électrique circulant dans l'organe de protection cathodique entre la première borne et l'au moins une deuxième borne lorsque le fluide électriquement conducteur circule dans le passage de circulation de fluide.

La mesure de l'intensité du courant électrique circulant dans l'organe de protection cathodique permet de recueillir des informations permettant de déterminer notamment l'efficacité de la protection cathodique et l'état de consommation de l'organe de protection cathodique, et ce sans nécessiter le démontage de la bride de raccordement.

Suivant d'autres aspects avantageux de l'invention, le dispositif de raccordement comprend une ou plusieurs des caractéristiques suivantes, prises isolément ou suivant toutes les combinaisons techniquement possibles :
- l'organe de protection cathodique comprend un anneau de protection cathodique agencé dans le corps annulaire de la bride de raccordement et s'étendant autour du passage de circulation de fluide pour délimiter le passage de circulation de fluide ;
- l'anneau de protection cathodique est agencé dans une cavité annulaire interne du corps annulaire de la bride de raccordement, ladite cavité annulaire interne s'étendant en retrait radialement par rapport au passage de circulation de fluide, une périphérie interne de l'anneau de protection cathodique s'étendant dans la continuité d'une périphérie interne du corps annulaire de la bride de raccordement ;
- le circuit électrique présente deux deuxièmes bornes destinées à être reliées électriquement respectivement au deux portions de conduite, l'appareil de mesure de l'intensité du courant électrique étant destiné à mesurer l'intensité du courant électrique circulant dans l'organe de protection cathodique entre la première borne et chacune des deuxièmes bornes lorsque le fluide électriquement conducteur circule dans le passage de circulation de fluide ;
- le corps annulaire de la bride de raccordement comprend un orifice traversant s'étendant radialement depuis une périphérie externe du corps annulaire de la bride de raccordement jusqu'à l'organe de protection cathodique, la première borne du circuit électrique comprenant une sonde électrique s'étendant dans l'orifice traversant jusqu'à l'organe de protection cathodique.

L'invention concerne en outre un ensemble comprenant :
- deux portions de conduites destinées au transport d'un fluide électriquement conducteur ; et
- un dispositif de raccordement des deux portions de conduite, tel que décrit ci-dessus, l'au moins une deuxième borne du circuit électrique étant reliée électriquement à une des deux portions de conduite.

Suivant d'autres aspects avantageux de l'invention, l'ensemble comprend une ou plusieurs des caractéristiques suivantes, prises isolément ou suivant toutes les combinaisons techniquement possibles :
- les deux portions de conduite sont réalisées en un matériau électriquement conducteur, et :

- le corps annulaire de la bride de raccordement est réalisé en un matériau électriquement conducteur, l'ensemble comprenant en outre entre chaque portion de conduite et le corps annulaire de la bride de raccordement un dispositif électriquement isolant ; ou
- le corps annulaire de la bride de raccordement est réalisé en un matériau électriquement isolant ;
   - l'ensemble comprend en outre un système de surveillance de l'organe de protection cathodique ,

   l'appareil de mesure de l'intensité du courant électrique étant configuré pour générer des données d'intensité représentatives de l'intensité du courant électrique circulant dans l'organe de protection cathodique en fonction du temps,
   le système de surveillance étant configuré pour recevoir les données d'intensité et pour déterminer à partir des données d'intensité reçues au moins un paramètre représentatif de la protection cathodique comprenant :
      - une efficacité de protection cathodique ;
      - un état de consommation de l'organe de protection cathodique ; et/ou
      - une surconsommation de l'organe de protection cathodique.

L'invention concerne en outre un procédé de surveillance d'un dispositif de raccordement tel que décrit ci-dessus, comprenant la mesure de l'intensité du courant électrique circulant dans l'organe de protection cathodique lorsque le fluide électriquement conducteur circule dans le passage de circulation de fluide.

Optionnellement, le procédé de surveillance est tel que le dispositif de raccordement est compris dans un ensemble, l'ensemble comprenant en outre :
- deux portions de conduites destinées au transport du fluide électriquement conducteur ; et
- un système de surveillance;

l'appareil de mesure de l'intensité du courant électrique générant des données d'intensité représentatives de l'intensité du courant électrique circulant dans l'organe de protection cathodique en fonction du temps,
le système de surveillance recevant les données d'intensité et déterminant à partir des données d'intensité reçues au moins un paramètre représentatif de la protection cathodique comprenant :
   - une efficacité de protection cathodique ;
   - un état de consommation de l'organe de protection cathodique ; et/ou
   - une surconsommation de l'organe de protection cathodique.

L'invention apparaîtra plus clairement à la lecture de la description qui va suivre, donnée uniquement à titre d'exemple non limitatif, et faite en référence aux dessins dans lesquels :
[Fig. 1] la figure 1 est une vue de côté d'un ensemble selon l'invention, selon un premier mode de réalisation ;
[Fig. 2] la figure 2 est une vue de face d'une portion d'un dispositif de raccordement de l'ensemble de la figure 1 ;
[Fig. 3] la figure 3 est une vue de côté d'un ensemble selon l'invention, selon un deuxième mode de réalisation ;
[Fig. 4] la figure 4 est une vue en coupe axiale d'une portion d'un dispositif de raccordement de l'ensemble de la figure 3, selon l'invention ;
[Fig. 5] la figure 5 est un ordinogramme illustrant un procédé de surveillance selon l'invention.

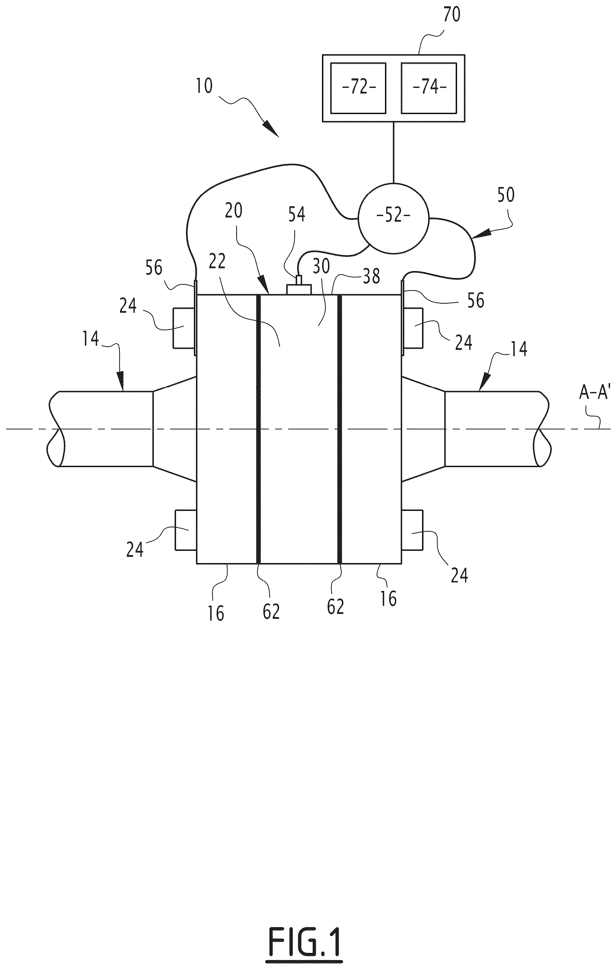

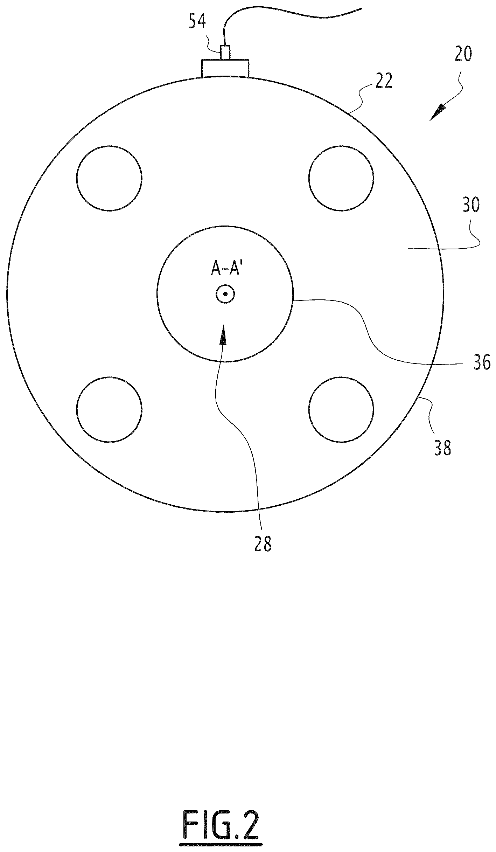

En référence aux figures 1 et 2, on décrit un premier mode de réalisation d'un ensemble 10 selon l'invention.

L'ensemble 10 comprend deux portions de conduites 14 destinées au transport d'un fluide électriquement conducteur, notamment de l'eau de mer. En particulier, le fluide électriquement conducteur présente une conductivité électrique comprise entre 0,005 S/m et 5 S/m à 20°C.

L'ensemble 10 comprend en outre un dispositif 20 de raccordement des deux portions de conduites 14.

Avantageusement, dans le premier mode de réalisation, l'ensemble 10 comprend en outre deux dispositifs électriquement isolants 62.

Encore avantageusement, l'ensemble 10 comprend en outre un système 70 de surveillance d'un organe de protection cathodique 42 du dispositif de raccordement 20.

Les portions de conduites 14 sont par exemple réalisées en un matériau conducteur, notamment en un alliage de nickel-chrome-molybdène, par exemple en Inconel^{®} 625, dont par exemple la résistivité électrique est sensiblement égale à 1,26 µΩ·m à 20°C.

Les portions de conduites 14 comprennent chacune une extrémité annulaire 16, notamment de type bride à souder, raccordée au dispositif de raccordement 20.

Le dispositif de raccordement 20 raccorde fluidiquement les deux portions de conduites 14 entre elles.

Le dispositif de raccordement 20 comprend une bride de raccordement 22, un organe de protection cathodique 42 et un circuit électrique 50.

La bride de raccordement 22 raccorde fluidiquement les deux portions de conduites 14.

La bride de raccordement 22 comporte un corps annulaire 30, également appelé corps à brides, délimitant un passage de circulation de fluide 28.

Avantageusement, la bride de raccordement 22 est fixée à chaque portion de conduite 14, notamment à chaque extrémité annulaire 16 des portions de conduite 14 par des éléments de fixation 24 tels que de la boulonnerie du type comportant des tiges filetées, des écrous et des freinages.

Dans les exemples des figures 1 à 4, le passage de circulation de fluide 28 s'étend selon un axe A-A'. Le corps annulaire 30 de la bride de raccordement 22 s'étend parallèlement à l'axe A-A'.

Dans le premier mode de réalisation, le corps annulaire 30 de la bride de raccordement 22 est réalisé en un matériau électriquement conducteur, par exemple en acier P355NH, dont la résistivité électrique est, par exemple, comprise entre 0,20 µΩ·m et 0,25 µΩ·m.

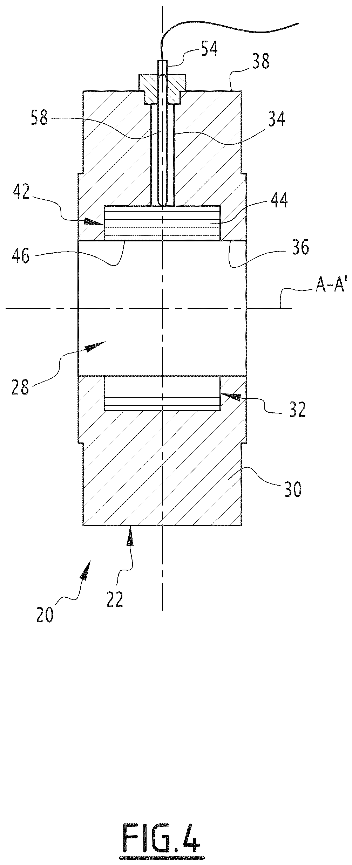

Avantageusement, comme illustré sur la figure 4, le corps annulaire 30 de la bride de raccordement 22 comprend une cavité annulaire interne 32. La cavité annulaire interne 32 s'étend en retrait radialement par rapport au passage de circulation de fluide 28, notamment en retrait radialement par rapport à une périphérie interne 36 du corps annulaire 30.

L'organe de protection cathodique 42 est agencé dans le corps annulaire 30 de la bride de raccordement 22.

L'organe de protection cathodique 42 délimite au moins en partie le passage de circulation de fluide 28.

Notamment, l'organe de protection cathodique 42 comprend un anneau de protection cathodique 44 agencé dans le corps annulaire 30 de la bride de raccordement 22.

L'anneau de protection cathodique 44 s'étend autour du passage de circulation de fluide 28 pour délimiter le passage de circulation de fluide 28.

En particulier, l'anneau de protection cathodique 44 est agencé dans la cavité annulaire interne 32 du corps annulaire 30 de la bride de raccordement 22.

L'anneau de protection cathodique 44 est notamment une anode sacrificielle.

En particulier, l'anneau de protection cathodique 44 est réalisé en un matériau de protection cathodique plus électronégatif que le matériau formant le corps annulaire 30 de la bride de raccordement 22 et que le matériau formant les portions de conduites 14. Par exemple, le matériau de protection cathodique est du zinc, un alliage de zinc ou un alliage aluminium/gallium. Par exemple, le matériau de protection cathodique est coulé dans la cavité annulaire interne 32, déposé dans la cavité annulaire interne 32 par centrifugation ou agencé dans la cavité annulaire interne 32 par fabrication additive.

Une périphérie interne 46 de l'anneau de protection cathodique 44 s'étend avantageusement dans la continuité de la périphérie interne 36 du corps annulaire 30 de la bride de raccordement 22. Ainsi, l'écoulement du fluide dans le passage de circulation de fluide 28 n'est pas influencé par la présence de l'anneau de protection cathodique 44.

Le circuit électrique 50 comprend un appareil 52 de mesure d'intensité de courant électrique.

L'appareil 52 est destiné à mesurer l'intensité du courant électrique circulant dans l'organe de protection cathodique 42 lorsque le fluide électriquement conducteur circule dans le passage de circulation de fluide 28, notamment le courant électrique circulant entre l'organe de protection cathodique 42 et les portions de conduite 14.

Le circuit électrique 50 comprend une première borne 54 reliée électriquement à l'organe de protection cathodique 42 et au moins une deuxième borne 56 reliée électriquement à l'une des deux portions de conduite 14. En particulier, le circuit électrique 50 comprend deux deuxièmes bornes 56 respectivement reliées électriquement à chacune des deux portions de conduite 14.

L'appareil 52 est notamment connecté électriquement entre la première borne 54 et l'au moins une deuxième borne 56 du circuit électrique 50, en particulier entre la première borne 54 et chacune des deuxièmes bornes 56 du circuit électrique 50.

En particulier, dans le premier mode de réalisation, la première borne 54 du circuit électrique 50 est reliée électriquement à l'organe de protection cathodique 42 par l'intermédiaire du corps annulaire 30.

Avantageusement, l'au moins une deuxième borne 56 du circuit électrique 50 est reliée électriquement à l'extrémité annulaire 16 de la portion de conduite 14 correspondante. Notamment, chaque deuxième borne 56 est reliée électriquement à l'extrémité annulaire 16 de la portion de conduite 14 correspondante.

L'appareil 52 est notamment configuré pour générer des données d'intensité représentatives de l'intensité du courant électrique circulant dans l'organe de protection cathodique 42 en fonction du temps et en particulier pour les transmettre au système de surveillance 70.

Les dispositifs électriquement isolants 62 sont agencées axialement entre le corps annulaire 30 de la bride de raccordement 22 et chacune des portions de conduite 14 pour isoler électriquement le corps annulaire 30 des portions de conduites 14. En particulier, les dispositifs électriquement isolants 62 comprennent des joints, en particulier en fibres, ainsi qu'optionnellement des canons isolants (non-illustrés) et des rondelles isolantes (non-illustrées) au niveau des éléments de fixations 24. Ceci permet d'éviter les courants de fuite entre le corps annulaire 30 et les portions de conduites 14. Ceci permet de mesurer l'intégralité du courant de protection et donc de connaître plus précisément la consommation de l'anneau 44.

Par exemple, les dispositifs électriquement isolants 62 sont réalisés en un matériau électriquement isolant, notamment un matériau diélectrique présentant par exemple une permittivité diélectrique comprise entre 1 et 10.

Avantageusement, le système de surveillance 70 comprend une unité de traitement d'informations formée par exemple d'une mémoire 72 et d'un processeur 74 associé à la mémoire 72.

Le système de surveillance 70 est configuré pour recevoir les données d'intensité et pour déterminer à partir des données d'intensité reçues au moins un paramètre représentatif de la protection cathodique comprenant :
- une efficacité de protection cathodique ;
- un état de consommation de l'organe de protection cathodique 42 ; et/ou
- une surconsommation de l'organe de protection cathodique 42.

Par exemple, à partir de la valeur d'intensité de courant instantanée, l'invention permet de renseigner sur l'efficacité de la protection cathodique instantanée ou sur une éventuelle sur-intensité de courant. Cela permet d'identifier le dysfonctionnement d'un organe de protection cathodique 42.

Selon un autre exemple, la mémorisation de l'historique de la valeur d'intensité du courant circulant à travers l'organe de protection cathodique 42 permet d'identifier les profils de protection et d'identifier des comportements imprévus.

Selon encore un autre exemple, la mesure du courant total débité à travers l'organe de protection cathodique 42 permet d'estimer la quantité d'anode sacrificielle consommée. En particulier, le calcul de la consommation à partir du courant total débité est réalisé à partir des lois sur l'électrolyse de Faraday.

Le système de surveillance 70 est propre à mettre en œuvre au moins en partie un procédé de surveillance qui sera décrit ultérieurement.

Le système de surveillance 70 est par exemple un circuit électronique conçu pour manipuler et/ou transformer des données représentées par des quantités électroniques ou physiques dans des registres du calculateur et/ou des mémoires en d'autres données similaires correspondant à des données physiques dans les mémoires de registres ou d'autres types de dispositifs d'affichage, de dispositifs de transmission ou de dispositifs de mémorisation.

En tant qu'exemples spécifiques, le système de surveillance 70 est réalisé sous forme d'un composant logique programmable, tel qu'un FPGA (de l'anglais *Field Programmable Gate Array*), ou encore d'un circuit intégré, tel qu'un ASIC (de l'anglais *Application Specific Integrated Circuit*).

En variante, lorsque le procédé est réalisé sous forme d'un ou plusieurs logiciels, c'est-à-dire sous forme d'un programme d'ordinateur, également appelé produit programme d'ordinateur, il est en outre apte à être enregistré sur un support, non représenté, lisible par ordinateur. Le support lisible par ordinateur est par exemple un medium apte à mémoriser des instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple FLASH ou NVRAM) ou une carte magnétique. Sur le support lisible est alors mémorisé un programme d'ordinateur comprenant des instructions logicielles.

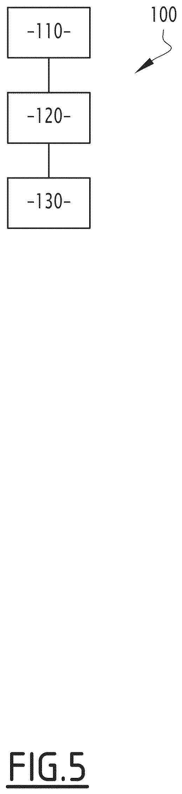

En référence à la figure 5, on décrit le procédé de surveillance 100 d'un dispositif de raccordement 20 tel que décrit plus haut et notamment d'un ensemble 10 tel que décrit plus haut.

Le procédé de surveillance 100 comprend la mesure 110 de l'intensité du courant électrique circulant dans l'organe de protection cathodique 42 lorsque le fluide électriquement conducteur circule dans le passage de circulation de fluide 28. Avantageusement, la mesure 110 a lieu sans engendrer de résistance électrique pouvant détériorer l'efficacité de l'organe de protection cathodique 42, car les courants générés sont de faible valeur et directement affectés par la résistance électrique selon la loi d'Ohm.

Avantageusement, le procédé de surveillance 100 comprend en outre la réception 120 par le système de surveillance 70 des données d'intensité.

Encore avantageusement, le procédé de surveillance 100 comprend en outre la détermination 130 par le système de surveillance 70 à partir des données d'intensité reçues de l'au moins un paramètre représentatif de la protection cathodique.

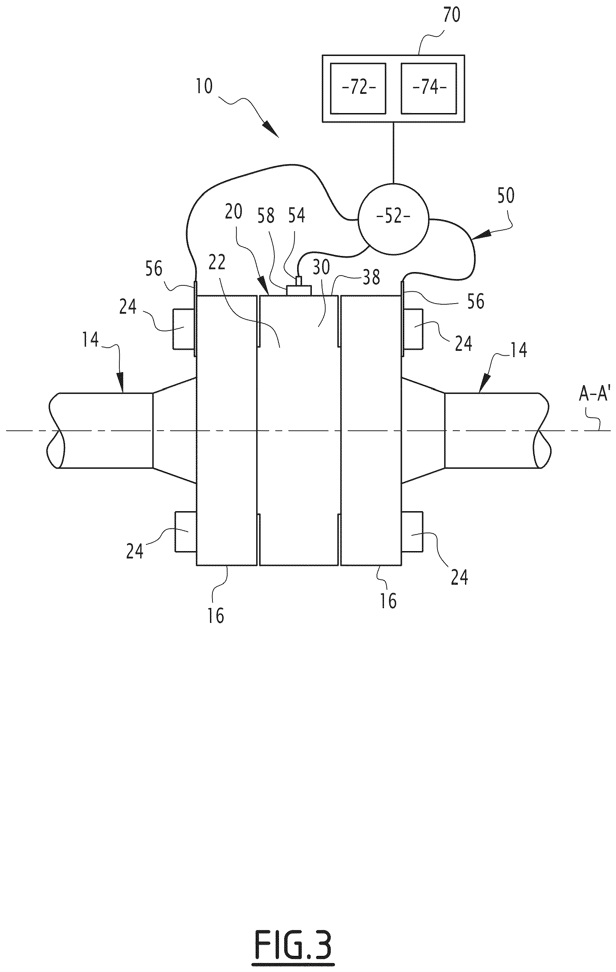

En référence à la figure 3, on décrit un deuxième mode de réalisation de l'ensemble 10 selon l'invention.

Ce deuxième mode de réalisation est identique au premier mode de réalisation hors mis concernant les caractéristiques suivantes.

Dans le deuxième mode de réalisation, le corps annulaire 30 de la bride de raccordement 22 est réalisé en un matériau électriquement isolant, par exemple un matériau thermoplastique tel que du polyacétal (également appelé POM-C). Le matériau électriquement isolant est notamment un matériau diélectrique, notamment présentant une constante diélectrique sensiblement égale à 3,8.

Dans ce deuxième mode de réalisation, en référence à la figure 4, le corps annulaire 30 de la bride de raccordement 22 comprend un orifice traversant 34 s'étendant radialement depuis une périphérie externe 38 du corps annulaire 30 de la bride de raccordement 22 jusqu'à l'organe de protection cathodique 42.

Dans le deuxième mode de réalisation, la première borne 54 du circuit électrique 50 comprend une sonde électrique 58 s'étendant dans l'orifice traversant 34 du corps annulaire 30 de la bride de raccordement 22 jusqu'à l'organe de protection cathodique 42.

Dans le deuxième mode de réalisation, l'ensemble 10 est dépourvu de dispositifs électriquement isolants 62.

## Revendications

1. Dispositif (20) de raccordement de deux portions de conduites (14) destinées au transport d'un fluide électriquement conducteur comprenant :
- une bride de raccordement (22) destinée à raccorder fluidiquement les deux portions de conduite (14) et comportant un corps annulaire (30) délimitant un passage (28) de circulation de fluide ;
- un organe de protection cathodique (42) agencé dans le corps annulaire (30) de la bride de raccordement (22) et délimitant au moins en partie le passage de circulation de fluide (28) ;
- un circuit électrique (50) dont une première borne (54) est reliée électriquement à l'organe de protection cathodique (42) et dont au moins une deuxième borne (56) est destinée à être reliée électriquement à une des deux portions de conduite (14) ;
**caractérisé en ce que** le circuit électrique (50) comprend en outre un appareil (52) de mesure de l'intensité du courant électrique destiné à mesurer l'intensité du courant électrique circulant dans l'organe de protection cathodique (42) entre la première borne (54) et l'au moins une deuxième borne (56) lorsque le fluide électriquement conducteur circule dans le passage de circulation de fluide (28).

2. Dispositif (20) selon la revendication 1, dans lequel l'organe de protection cathodique (42) comprend un anneau de protection cathodique (44) agencé dans le corps annulaire (30) de la bride de raccordement (22) et s'étendant autour du passage de circulation de fluide (28) pour délimiter le passage de circulation de fluide (28).

3. Dispositif (20) selon la revendication 2, dans lequel l'anneau de protection cathodique (44) est agencé dans une cavité annulaire interne (32) du corps annulaire (30) de la bride de raccordement (22), ladite cavité annulaire interne (32) s'étendant en retrait radialement par rapport au passage de circulation de fluide (28), une périphérie interne (46) de l'anneau de protection cathodique (44) s'étendant dans la continuité d'une périphérie interne (36) du corps annulaire (30) de la bride de raccordement (22).

4. Dispositif (20) selon l'une quelconque des revendications précédentes, dans lequel le circuit électrique (50) présente deux deuxièmes bornes (56) destinées à être reliées électriquement respectivement au deux portions de conduite (14), l'appareil (52) de mesure de l'intensité du courant électrique étant destiné à mesurer l'intensité du courant électrique circulant dans l'organe de protection cathodique (42) entre la première borne (54) et chacune des deuxièmes bornes (56) lorsque le fluide électriquement conducteur circule dans le passage de circulation de fluide (28).

5. Dispositif (20) selon l'une quelconque des revendications précédentes, dans lequel le corps annulaire (30) de la bride de raccordement (22) comprend un orifice traversant (34) s'étendant radialement depuis une périphérie externe (38) du corps annulaire (30) de la bride de raccordement (22) jusqu'à l'organe de protection cathodique (42), la première borne (54) du circuit électrique (50) comprenant une sonde électrique (58) s'étendant dans l'orifice traversant (34) jusqu'à l'organe de protection cathodique (42).

6. Ensemble (10) comprenant :
- deux portions de conduites (14) destinées au transport d'un fluide électriquement conducteur ; et
- un dispositif (20) de raccordement des deux portions de conduite (14), selon l'une quelconque des revendications précédentes, l'au moins une deuxième borne (56) du circuit électrique (50) étant reliée électriquement à une des deux portions de conduite (14).

7. Ensemble (10) selon la revendication 6, dans lequel les deux portions de conduite (14) sont réalisées en un matériau électriquement conducteur et dans lequel :
- le corps annulaire (30) de la bride de raccordement (22) est réalisé en un matériau électriquement conducteur, l'ensemble (10) comprenant en outre entre chaque portion de conduite (14) et le corps annulaire (30) de la bride de raccordement (22) un dispositif électriquement isolant (62) ; ou
- le corps annulaire (30) de la bride de raccordement (22) est réalisé en un matériau électriquement isolant.

8. Ensemble (10) selon la revendication 6 ou 7, comprenant en outre un système (70) de surveillance de l'organe de protection cathodique (42),
l'appareil (52) de mesure de l'intensité du courant électrique étant configuré pour générer des données d'intensité représentatives de l'intensité du courant électrique circulant dans l'organe de protection cathodique (42) en fonction du temps,
le système de surveillance (70) étant configuré pour recevoir les données d'intensité et pour déterminer à partir des données d'intensité reçues au moins un paramètre représentatif de la protection cathodique comprenant :
- une efficacité de protection cathodique ;
- un état de consommation de l'organe de protection cathodique (42) ; et/ou
- une surconsommation de l'organe de protection cathodique (42).

9. Procédé (100) de surveillance d'un dispositif de raccordement selon l'une quelconque des revendications 1 à 5, comprenant la mesure (110) de l'intensité du courant électrique circulant dans l'organe de protection cathodique (42) lorsque le fluide électriquement conducteur circule dans le passage de circulation de fluide (28).

10. Procédé de surveillance (100) selon la revendication 9, dans lequel le dispositif de raccordement (20) est compris dans un ensemble (10), l'ensemble (10) comprenant en outre :
- deux portions de conduites (14) destinées au transport du fluide électriquement conducteur ; et
- un système de surveillance (70) ;
l'appareil (52) de mesure de l'intensité du courant électrique générant des données d'intensité représentatives de l'intensité du courant électrique circulant dans l'organe de protection cathodique (42) en fonction du temps,
le système de surveillance (70) recevant les données d'intensité et déterminant à partir des données d'intensité reçues au moins un paramètre représentatif de la protection cathodique comprenant :
- une efficacité de protection cathodique ;
- un état de consommation de l'organe de protection cathodique (42) ; et/ou
- une surconsommation de l'organe de protection cathodique (42).

## Revendications modifiées

### Revendications modifiées conformément à la règle 137(2) CBE.

1. Ensemble (10) comprenant :
- deux portions de conduites (14) destinées au transport d'un fluide électriquement conducteur ; et
- un dispositif (20) de raccordement des deux portions de conduites (14), comprenant :
- une bride de raccordement (22) destinée à raccorder fluidiquement les deux portions de conduite (14) et comportant un corps annulaire (30) délimitant un passage (28) de circulation de fluide ;
- un organe de protection cathodique (42) agencé dans le corps annulaire (30) de la bride de raccordement (22) et délimitant au moins en partie le passage de circulation de fluide (28) ;
- un circuit électrique (50) dont une première borne (54) est reliée électriquement à l'organe de protection cathodique (42) et dont au moins une deuxième borne (56) est reliée électriquement à une des deux portions de conduite (14) ;
**caractérisé en ce que** le circuit électrique (50) comprend en outre un appareil (52) de mesure de l'intensité du courant électrique destiné à mesurer l'intensité du courant électrique circulant dans l'organe de protection cathodique (42) entre la première borne (54) et l'au moins une deuxième borne (56) lorsque le fluide électriquement conducteur circule dans le passage de circulation de fluide (28),
l'ensemble (10) comprenant en outre un système (70) de surveillance de l'organe de protection cathodique (42),
l'appareil (52) de mesure de l'intensité du courant électrique étant configuré pour générer des données d'intensité représentatives de l'intensité du courant électrique circulant dans l'organe de protection cathodique (42) en fonction du temps,
le système de surveillance (70) étant configuré pour recevoir les données d'intensité et pour déterminer à partir des données d'intensité reçues au moins un paramètre représentatif de la protection cathodique comprenant :
- une efficacité de protection cathodique ;
- un état de consommation de l'organe de protection cathodique (42) ; et/ou
- une surconsommation de l'organe de protection cathodique (42).

2. Ensemble (10) selon la revendication 1, dans lequel l'organe de protection cathodique (42) comprend un anneau de protection cathodique (44) agencé dans le corps annulaire (30) de la bride de raccordement (22) et s'étendant autour du passage de circulation de fluide (28) pour délimiter le passage de circulation de fluide (28).

3. Ensemble (10) selon la revendication 2, dans lequel l'anneau de protection cathodique (44) est agencé dans une cavité annulaire interne (32) du corps annulaire (30) de la bride de raccordement (22), ladite cavité annulaire interne (32) s'étendant en retrait radialement par rapport au passage de circulation de fluide (28), une périphérie interne (46) de l'anneau de protection cathodique (44) s'étendant dans la continuité d'une périphérie interne (36) du corps annulaire (30) de la bride de raccordement (22).

4. Ensemble (10) selon l'une quelconque des revendications précédentes, dans lequel le circuit électrique (50) présente deux deuxièmes bornes (56) destinées à être reliées électriquement respectivement au deux portions de conduite (14), l'appareil (52) de mesure de l'intensité du courant électrique étant destiné à mesurer l'intensité du courant électrique circulant dans l'organe de protection cathodique (42) entre la première borne (54) et chacune des deuxièmes bornes (56) lorsque le fluide électriquement conducteur circule dans le passage de circulation de fluide (28).

5. Ensemble (10) selon l'une quelconque des revendications précédentes, dans lequel le corps annulaire (30) de la bride de raccordement (22) comprend un orifice traversant (34) s'étendant radialement depuis une périphérie externe (38) du corps annulaire (30) de la bride de raccordement (22) jusqu'à l'organe de protection cathodique (42), la première borne (54) du circuit électrique (50) comprenant une sonde électrique (58) s'étendant dans l'orifice traversant (34) jusqu'à l'organe de protection cathodique (42).

6. Ensemble (10) selon l'une quelconque des revendications 1 à 5, dans lequel les deux portions de conduite (14) sont réalisées en un matériau électriquement conducteur et dans lequel :
- le corps annulaire (30) de la bride de raccordement (22) est réalisé en un matériau électriquement conducteur, l'ensemble (10) comprenant en outre entre chaque portion de conduite (14) et le corps annulaire (30) de la bride de raccordement (22) un dispositif électriquement isolant (62) ; ou
- le corps annulaire (30) de la bride de raccordement (22) est réalisé en un matériau électriquement isolant.

7. Procédé (100) de surveillance d'un dispositif de raccordement (20) d'un ensemble (10) selon l'une quelconque des revendications 1 à 6, comprenant la mesure (110) de l'intensité du courant électrique circulant dans l'organe de protection cathodique (42) lorsque le fluide électriquement conducteur circule dans le passage de circulation de fluide (28),
l'appareil (52) de mesure de l'intensité du courant électrique générant des données d'intensité représentatives de l'intensité du courant électrique circulant dans l'organe de protection cathodique (42) en fonction du temps,
le système de surveillance (70) recevant les données d'intensité et déterminant à partir des données d'intensité reçues au moins un paramètre représentatif de la protection cathodique comprenant :
- une efficacité de protection cathodique ;
- un état de consommation de l'organe de protection cathodique (42) ; et/ou
- une surconsommation de l'organe de protection cathodique (42).
